# EUROPEAN PATENT APPLICATION

(11) **EP 2 724 624 A1**
(43) Date of publication of application: **30.04.2014**
(21) Application number: 11868311.9
(22) Date of filing: 21.06.2011
(51) Int. Cl.: A23L 1/00, A23L 1/20, A23L 1/32

(54) **COMPOSITION FOR WATER-SOLUBLE POWDER DISPERSION AND METHOD FOR PRODUCING SAME, AS WELL AS FOOD PRODUCT USING COMPOSITION FOR WATER-SOLUBLE POWDER DISPERSION**

(71) Applicant: Kewpie Corporation, Tokyo 150-0002 (JP)
(72) Inventor: SASAKI Makoto, Chofu-shi Tokyo 182-0002 (JP); SHIMOHASHI Masato, Chofu-shi Tokyo 182-0002 (JP)
(74) Representative: Winter, Brandl, Fürniss, Hübner, Röss, Kaiser, Polte - Partnerschaft
(86) International application number: PCT/JP2011/064162
(87) International publication number: WO 2012/176281

(57) **Abstract**

Provided is a composition that is added to a dish prepared from a food ingredient having a high water content, such as a vegetable or a boiled egg, to suppress syneresis from the dish even a long time after preparation of the dish. The composition is a water-soluble powder component-dispersing composition containing edible oil and fat, water, a protein, a reduced starch saccharification product, and a polysaccharide, wherein the edible oil and fat and undissolved water-soluble powder components are each dispersed in the composition, the total light transmittance (reference: clear water, wavelength: 390 nm, light path length: 5 mm) is 13% to 35%, and the total light transmittance at the time of diluting the composition threefold with water is 0.1% to 12%.

## Description

### Technical Field

The present invention relates to a water-soluble powder component-dispersing composition that is used in a dish prepared from a food ingredient having a high water content, such as a vegetable or a boiled egg, and is unlikely to result in syneresis from the dish and to impair the taste of the dish even a long time after the preparation of the dish using the food ingredient having a high water content. The present invention also relates to a method for producing the same, and a food product using the water-soluble powder component-dispersing composition.

### Background Art

It is fundamental to eat a dish in which a food ingredient having a high water content is dressed with a seasoning, including fried vegetables in which vegetables are fried and seasoned and an egg salad in which boiled eggs are dressed with a seasoning, immediately after the preparation of the dish. After the preparation, water oozes from the vegetables or the boiled eggs to result in syneresis in the whole dish. Thus, the taste of the vegetables or the boiled eggs themselves is impaired, and the appearance of the whole dish deteriorates. In particular, when the dish has a high salt concentration or a strong acid taste, oozing of water from the vegetables or the boiled eggs is promoted, and similarly, the above problems are likely to be caused.

As a method for solving such a problem, a method of adding a thickener having water retention properties has been conventionally proposed. For example, Japanese Patent Application Laid-Open No. Hei. 11-196764 (Patent Literature 1) proposes a composition for boiled vegetables with dressing, containing a) sodium acetate, b) glycine, c) xanthan gum, and d) one or more substances selected from the group consisting of guar gum, locust bean gum, tamarind gum, tragacanth gum, gum arabic, and carrageenan. Further, Japanese Patent Application Laid-Open No. 2008-141972 (Patent Literature 2) proposes a drip preventing agent for a raw vegetable, a daily dish, or an ingredient that contains low-viscosity galacto-xyloglucan. However, when the thickener in an amount sufficient to obtain a syneresis preventing effect is added, the method of adding a thickener simply has a problem in which the taste of a whole dish is poor. Therefore, it is difficult that syneresis of the dish is prevented without impairing the taste only by adding the thickener.

### Citation List

### Patent Literature

Patent Literature 1: Japanese Patent Application Laid-Open No. Hei. 11-196764
Patent Literature 2: Japanese Patent Application Laid-Open No. 2008-141972

### Summary of Invention

### Technical Problem

An object of the present invention is to provide a composition that is added to a dish prepared from a food ingredient having a high water content, such as a vegetable or a boiled egg, and suppresses syneresis from the dish without impairing the taste of the dish even a long time after the preparation of the dish, as well as to provide a method for producing such a composition, and a food product using such a composition.

### Solution to Problem

The present inventor has found that when a water-soluble powder component-dispersing composition which contains a particular component and in which edible oil and fat and a water-soluble powder component are undissolved and dispersed and the transparency is significantly reduced during addition of water is added to a food ingredient having a high water content, syneresis from the food ingredient having a high water content is prevented and the taste is unlikely to be impaired. Thus, the present invention has been completed.

Therefore, the present invention provides a water-soluble powder component-dispersing composition, including edible oil and fat, water, a protein, a reduced starch saccharification product, and a polysaccharide, wherein the edible oil and fat and an undissolved water-soluble powder component are each dispersed in the composition, the total light transmittance (reference: clear water, wavelength: 390 nm, light path length: 5 mm) is 13% to 35%, and the total light transmittance at the time of diluting the composition threefold with water is 0.1% to 12%.

The present invention also provides a food product that is prepared from at least one of a vegetable, a heat-coagulated egg processed food product, and a tofu as a raw material, and contains the water-soluble powder component-dispersing composition.

Further, the present invention provides a method for producing a water-soluble powder component-dispersing composition that uses food product ingredients corresponding to water, a protein, a reduced starch saccharification product, and a polysaccharide to produce the afore-mentioned water-soluble powder component-dispersing composition and includes a step 1 of mixing a water-soluble powder which is part of the food product ingredients and the edible oil and fat to prepare a dispersion of water-soluble powder in oil, and a step 2 of mixing the remainder of the food product ingredients in the dispersion in oil.

### Effects of Invention

When the water-soluble powder component-dispersing composition of the present invention is added to a food ingredient having a high water content, such as a vegetable and an egg, to prepare a dish, the composition of the present invention absorbs water oozed from the food ingredient having a high water content to produce a thick oil-in-water emulsified product. The emulsified product is integrated into a whole dish, and thus syneresis from the dish is prevented. Accordingly, even a long time after the preparation of the dish from the food ingredient having a high water content, the taste of the dish is unlikely to be impaired.

### Brief Description of Drawings

FIG. 1 is photographs before and after a water-soluble powder component-dispersing composition of Example is mixed in water.
FIG. 2 is an optical photomicrograph before the water-soluble powder component-dispersing composition of Example is mixed in water.
FIG. 3 is an optical photomicrograph after the water-soluble powder component-dispersing composition of Example is mixed in water.

### Description of Embodiments

Hereinafter, the present invention will be described in detail. In the present invention, "%" indicates "% by mass" and "part" indicates "part by mass" unless otherwise indicated.

### 1. Water-soluble Powder Component-dispersing Composition

The water-soluble powder component-dispersing composition of the present invention contains edible oil and fat, water, a protein, a reduced starch saccharification product, and a polysaccharide. The composition may have various forms such as a high-viscosity paste form and a low-viscosity liquid form. The composition in all of the forms is characterized in that the edible oil and fat and an undissolved water-soluble powder component are dispersed in the composition.

The water-soluble powder component is considered to be formed from at least part of the protein, the reduced starch saccharification product, and the polysaccharide.

The water-soluble powder component exerts a water absorption action. Therefore, when the water-soluble powder component which is in a dispersed state without dissolving comes into contact with a seasoning liquid, the powder component absorbs water from the seasoning liquid due to a difference of osmotic pressure. Further, when the powder component comes into contact with a food ingredient having a high water content, such as a vegetable and an egg, it absorbs water oozed from the food ingredient. In particular, the water oozed from the food ingredient having a high water content by heating is readily absorbed.

In contrast, when water is added to the water soluble powder component-dispersing composition of the present invention, the edible oil and fat dispersed therein becomes finer oil and fat particles to cause phase transition, and the finer oil and fat particles are stably dispersed in an emulsified state, as described below.

Therefore, when the water-soluble powder component-dispersing composition of the present invention is added in a food ingredient having a high water content, water oozed from the food ingredient having a high water content easily results in formation of stable emulsified state by a synergistic effect of phase transition in which oil and fat is converted into finer particles and the water absorption action of the water-soluble powder component. Thus, the water is integrated into a whole dish prepared from the food ingredient having a high water content. As a result, syneresis from the dish is prevented and the taste is unlikely to be impaired.

In the water-soluble powder component-dispersing composition of the present invention, the presence of water-soluble powder component in a dispersed state without dissolving can be confirmed by observing the composition of the present invention with an optical microscope (magnification: 500 times). In order to confirm whether or not the powder (granulated substance) confirmed by the observation is water soluble, the composition of the present invention is diluted with water, and the diluted solution is similarly observed with an optical microscope. At this time, if there is no powder (granulated substance) in the diluted solution, it can be determined that the powder is water soluble.

Further, the water-soluble powder component-dispersing composition of the present invention has a total light transmittance (reference: clear water, wavelength: 390 nm, light path length: 5 mm) of 13% to 35%. When the composition is diluted with water, the degree of transparency is reduced. The total light transmittance at the time of diluting the composition threefold with water is 0.1% to 12%, and preferably 1% to 10%. Thus, the addition of water reduces the degree of transparency. This is because the addition of water to the water-soluble powder component-dispersing composition of the present invention easily causes phase transition, and the composition becomes in an emulsified state in which the oil and fat particles become finer although the composition is an edible oil and fat dispersed substance in which edible oil and fat is dispersed.

This phase transition is similar to a D (Detergent) phase emulsification in which an emulsified product of fine oil droplets is obtained. The D phase emulsification is a method in which an emulsifier is dissolved in a polyhydric alcohol or a polyhydric alcohol aqueous solution, an oil phase is added to the dissolved solution to cause emulsification, preparing an O/D emulsified composition, and the O/D emulsified composition is diluted with an aqueous medium to obtain a fine oil-in-water (O/W) emulsion. In this case, the O/D emulsified composition before dilution with the aqueous medium is almost clear. In contrast, the water-soluble powder component-dispersing composition of the present invention is not considered to be clear before the dilution with water since the composition is a mixture of edible oil and fat, water, a protein, a reduced starch saccharification product, and a polysaccharide, and an undissolved water-soluble powder component is in a dispersed state. Therefore, the water-soluble powder component-dispersing composition of the present invention is considered to be different from the O/D emulsified composition forming a D phase emulsified product.

In the present invention, the total light transmittance is a value relative to the total light transmittance of clear water. In other words, the total light transmittance is a percentage of transmitted light flux containing a diffuse component relative to a parallel incident light flux to a sample. The total light transmittance (%) of the sample in the present invention represents the transmittance (%) of a sample in the case where the transmittance of clear water as a reference is 100%. Specifically, the total light transmittance is a value obtained by turbidity measurement at a wavelength of 390 nm and a light path length of 5 mm in accordance with integrating sphere type photoelectronic photometry, and can be measured by employing a turbidity meter (Type name: "WA 2000N," manufactured by NIPPON DENSHOKU INDUSTRIES CO., LTD.).

Next, each component constituting the water-soluble powder component-dispersing composition of the present invention will be described.

### Protein

Specific examples of the protein may include a milk protein, an egg protein, and a soybean protein.

In order to incorporate the milk protein in the composition of the present invention, in preparation of the composition of the present invention, a food product ingredient corresponding to a milk protein, specifically, milk or dairy products containing a milk protein as a main component may be blended. Examples of the milk or the daily products may include products defined in Ministerial Ordinance on Milk and Milk products Concerning Compositional Standards, etc. (Ministry of Health and Welfare Ordinance No. 52, December 27, 1951), and specific examples thereof may include milk, concentrated milk, whole milk powder, skimmed milk powder, sweetened milk powder, cheese, whey powder, protein concentrated whey powder, and cream.

A form during blending such a food product ingredient is preferably a water-soluble powder. Preferred examples of such a water-soluble powder may include milk powder such as whole milk powder, skimmed milk powder, and sweetened milk powder.

In order to incorporate the egg protein in the composition of the present invention, in preparation of the composition of the present invention, a food product ingredient corresponding to an egg protein, specifically, egg yolk containing an egg protein as a main component or a mixture of egg yolk and egg albumen may be blended. Examples of an egg constituting such a food product ingredient may include a raw egg, and a raw egg which has been treated with one or more processes including a sterilization process, a refrigeration process, a drying process such as spray-drying and freeze-drying, an enzymatic process with phospholipase A1, phospholipase A2, phospholipase C, phospholipase D, or protease, a desugaring process with a yeast or glucose oxidase, a decholesterolization process such as a supercritical carbon dioxide process, and a mixing process with salt or saccharides.

A form during blending such a food product ingredient to incorporate an egg protein in the composition of the present invention may be liquid or powder.

In order to incorporate the soybean protein in the composition of the present invention, a food product ingredient corresponding to a soybean protein, specifically, an isolated soybean protein (a protein extracted from a defatted soybean is treated with an acid, neutralized, and spray-dried to obtain a protein having an amount of contained protein of 90% or more), a concentrated soybean protein (a water-soluble saccharide, an ash content, and the like are removed from a defatted soybean to obtain a protein having an amount of contained protein of 70% or more), or the like can be blended.

Further, a soybean protein contains a partially decomposed substance of a soybean protein. Specific examples of such a partially decomposed substance may include oligopeptide obtained by partially decomposing a protein material using an enzyme or an acid.

Among the above-described proteins, the water-soluble powder component-dispersing composition of the present invention preferably contains a milk protein since a syneresis preventing effect can be easily obtained, and more preferably further contains an egg protein.

The amount of protein contained in the water-soluble powder component-dispersing composition of the present invention is preferably 2% to 10%, and more preferably 3% to 8%.

From the viewpoint of syneresis preventing effect, the total amount of solid contents in the food product ingredients blended to incorporate a protein in the water-soluble powder component-dispersing composition of the present invention is preferably 0.1% to 30%, and more preferably 1% to 25%. In contrast, when the amount of solid content in the food product ingredient containing a protein is too small, edible oil and fat cannot be dispersed in the composition, and phase separation is likely to occur. When it is too large, the phase transition is unlikely to occur.

### Reduced Starch Saccharification Product

For example, a reduced starch saccharification product is obtained by adding hydrogen to a starch saccharification product referred to as dextrin, maltodextrin, or starch syrup obtained by decomposition of starches such as potato starch, corn starch, waxy corn starch, and tapioca starch, to reduce a carbonyl group in the saccharification product into a hydroxyl group. Further, the reduced starch saccharification product is a mixed saccharide of sugar alcohol having a glucose skeleton with various degrees of polymerization. The food product ingredients corresponding to the reduced starch saccharification product used in the preparation of the composition of the present invention are not particularly limited as long as they are contained as a main component. A liquid or powdered reduced starch saccharification product may be used.

DE is an indication representing the degree of decomposition in the starch saccharification product. As the DE value is larger, the degree of decomposition is higher. In the present invention, a reduced product of the starch saccharification product which has a degree of decomposition as low as DE of 12 or less is preferably used, and a reduced product of the starch saccharification product having a DE of 9 or less is more preferably used.

The amount of the reduced starch saccharification product contained in the water-soluble powder component-dispersing composition of the present invention is preferably 25 parts to 150 parts, and more preferably 50 parts to 100 parts, in terms of solid content relative to 100 parts of edible oil and fat. When the amount of the reduced starch saccharification product is too small, edible oil and fat cannot be dispersed in the composition, and phase separation is likely to occur. When the amount of the reduced starch saccharification product is too large, the phase transition is unlikely to occur.

### Polysaccharide

The polysaccharide is not particularly limited as long as it is suitable for an edible substance. Examples of food product ingredients corresponding to the polysaccharide may include starch including potato starch, corn starch, tapioca starch, wheat starch, rice starch, modified starch obtained by a process such as gelatinization and cross-linking of the starch, and starch treated with heat and humidity, gum substances such as xanthan gum, tamarind seed gum, locust bean gum, gellan gum, guar gum, gum arabic, and psyllium seed gum, glucose, sorbitol, sucrose, trehalose, pectin, inulin, and cellulose. In the present invention, it is preferable that starch and/or a gum substance be used among the polysaccharides since the syneresis preventing effect is likely to be obtained. The polysaccharide of the present invention does not contain the above-described reduced starch saccharification product.

The form of the polysaccharide used in production of the composition of the present invention is not particularly limited as long as a food product ingredient contains the polysaccharide as a main component. A liquid or powdered polysaccharide can be used.

The amount of the polysaccharide contained in the water-soluble powder component-dispersing composition is preferably 0.01% to 20%, and more preferably 0.1% to 10% since the syneresis preventing effect is easily obtained. When the amount of the polysaccharide is too large, the texture tends to become heavy, which is not preferable.

### Edible Oil And Fat

The edible oil and fat represents a lipid containing triacylglycerol or diacylglycerol as a main component, and examples thereof may include animal and vegetable oils such as rapeseed oil, corn oil, cottonseed oil, safflower oil, olive oil, safflower oil, soybean oil, palm oil, milk fat, beef tallow, lard, and egg yolk oil, and purified oil thereof, oils and fats obtained by a chemical or enzymatic treatment, such as medium chain fatty acid (MCT), diglyceride, hydrogenated oil, and enzymatically treated egg yolk oil. These edible oil and fat may be used singly or in combinations of two or more kinds thereof. When two or more kinds thereof are blended, rich taste can be achieved.

The amount of the edible oil and fat contained in the water-soluble powder component-dispersing composition is preferably 20% to 60%, and more preferably 30% to 50% since the syneresis preventing effect is easily obtained. When the amount of the edible oil and fat is too large or too small, the phase transition is unlikely to occur.

### Amount of Water

In the water-soluble powder component-dispersing composition of the present invention, the amount of contained water is preferably 5% to 21%, and more preferably 10% to 18%. When the amount of water is too large, water oozed from a food ingredient having a high water content during adding the water-soluble powder component-dispersing composition of the present invention to the food ingredient having a high water content easily prevents the phase transition. When the water amount is too small, oil phase separation easily occurs.

Herein, the water in the water-soluble powder component-dispersing composition is not restricted to the amount of water to be added in production of the water-soluble powder component-dispersing composition. The water contains water contained in food product ingredients each used to incorporate the protein, the reduced starch saccharification product, and the polysaccharide in the composition of the present invention. For example, when egg yolk is used like Examples described below, water contained in the egg yolk constitutes the water used herein. Furthermore, when water-containing liquid sugar is used as the reduced starch saccharification product, water contained in the liquid sugar also constitutes the water used herein. The water amount of the water-soluble powder component-dispersing composition can be measured by a method of drying by heating under reduced pressure.

### Water-Soluble Powder Component

In the composition of the present invention, a water-soluble powder component is dispersed without dissolving. The composition of the water-soluble powder component is not clear, but is considered to be formed from one or more kinds of the protein, the reduced starch saccharification product, and the polysaccharide. When the total amount of the protein, the reduced starch saccharification product, and the polysaccharide is an amount sufficient to be incorporated in the composition of the present invention, a water-soluble powder component can be dispersed without dissolving.

In order to disperse the water-soluble powder component in the composition of the present invention without dissolving, it is preferable that the total amount of solid contents of the respective food product ingredients used to incorporate the protein, the reduced starch saccharification product, or the polysaccharide in the composition of the present invention is sufficiently high. The total amount of solid contents of the food product ingredients of the three components depends on the kinds of the respective food product ingredients, and is preferably 20% to 60%, more preferably 30% to 50%, and still more preferably 35% to 45%. When the total amount is too small, the water-soluble powder component is unlikely to be dispersed in a composition containing the components, edible oil and fat, and water, without dissolving. Furthermore, the water absorption action when adding the composition to a food ingredient having a high water content is poor, and syneresis from a food ingredient product is unlikely to be prevented. In contrast, when it is too large, the viscosity of the water-soluble powder component-dispersing composition is increased, and therefore dressing it with a food ingredient having a high water content is difficult.

### Other Raw Materials

The water-soluble powder component-dispersing composition of the present invention may contain, in addition to the above-described respective components, various seasonings such as salt, sugar, and pepper, ascorbic acid or a salt thereof, an antioxidant such as vitamin E, a dye, a condiment, and ingredients such as onion and bacon chips.

### 2. Food Product Using Water-Soluble Powder Component-Dispersing Composition

As use of the water-soluble powder component-dispersing composition of the present invention, the composition may be added to a dish prepared from a food ingredient having a high water content as a raw material as part of or instead of seasoning liquid or sauce.

Examples of the food ingredient having a high water content may include a vegetable such as cabbage, lettuce, cucumber, and radish, a fruit such as apple and pineapple, a heat-coagulated egg processed food product such as boiled egg and scrambled egg, and a tofu. When the amount of water of the food ingredient having a high water content is preferably 50% or more, and more preferably 70% or more, the syneresis preventing effect due to the water-soluble powder component-dispersing composition of the present invention can be markedly exerted.

Specific examples of the food product in which the water-soluble powder component-dispersing composition of the present invention is added to a food ingredient having a high water content may include salad such as coleslaw salad, potato salad, and egg salad, and a prepared food product such as a fried dish and a dressed dish. The amount of the water-soluble powder component-dispersing composition added in the food product depends on the kind of the food product, and is generally 1% or more, preferably 3% to 98% by mass, and more preferably 5% to 70%. Specifically, in a fried dish, the amount of the water-soluble powder component-dispersing composition added is 15% to 40%, in coleslaw salad, the amount is 10% to 30%, and in egg salad, the amount is 10% to 30%.

### 3. Method for Producing Water-Soluble Powder Component Dispersing Composition

The water-soluble powder component-dispersing composition of the present invention can be easily produced by performing the following steps 1 and 2 in this order.

### Step 1

Part of food product ingredients which correspond to water, a protein, a reduced starch saccharification product, and a polysaccharide, and have a water-soluble powder form is mixed with edible oil and fat to prepare a dispersion of water-soluble powder in oil. Specifically, of the food product ingredients each added in order to incorporate water, a protein, a reduced starch saccharification product, and a polysaccharide, water-soluble powders, and preferably water-soluble powders having a water amount of 10% or less, and preferably a water amount of 5% or less are mixed in edible oil and fat in turn. Or alternatively, these water-soluble powders are mixed in advance and the mixture is then mixed in edible oil and fat, to prepare a mixture in which at least part of the water-soluble powders is dispersed in the edible oil and fat without dissolving.

Among the food product ingredients added in order to incorporate a protein, a reduced starch saccharification product, and a polysaccharide, the total amount of the water-soluble powder to be mixed with edible oil and fat in the step 1 is preferably 5% to 40%, more preferably 10% to 30%, and still more preferably 15% to 25%.

A mixing operation can be performed at room temperature using a stirrer such as a kneader and a hobart mixer, but may be performed under heating since the well-harmonizing taste and cooking feeling is imparted by heating.

### Step 2

Among the food product ingredients corresponding to the water, the protein, the reduced starch saccharification product, and the polysaccharide which form the water-soluble powder component-dispersing composition of the present invention, a remainder of the food product ingredients used in the step 1 is mixed in the dispersion of water-soluble powder in oil obtained in the step 1 to obtain a water-soluble powder component-dispersing composition.

The amount of water to be added in this case may be an amount satisfying a property in which the water-soluble powder component-dispersing composition causes the phase transition, that is, a property in which "the total light transmittance is 13% to 35%, and the total light transmittance at the time of diluting the composition threefold with water is 0.1% to 12%." It is preferable that the amount be such an amount that the water amount of the water-soluble powder component-dispersing composition is preferably 5% to 21%, and more preferably 10% to 18%.

As a method of adding water, water may be blended, a food product ingredient containing water, for example, a water-containing liquid sugar may be blended as the reduced starch saccharification product, or egg yolk containing water may be blended.

As described above, at least part of the protein, the reduced starch saccharification product, and the polysaccharide contained in the composition of the present invention is added in a form of water-soluble powder in the step 1, and the remainder is added in the step 2. When a food product ingredient blended to incorporate a protein includes one in a powder form and one in a liquid form that has a water amount higher than the powder form (for example, dried egg yolk and raw egg yolk), it is preferable that the food product ingredient in a powder form be added in the step 1 and the food product ingredient in the liquid form be added in the step 2.

### EXAMPLES

### [Example 1]

### Water-Soluble Powder Component-Dispersing Composition

A water-soluble powder component-dispersing composition was produced at a blending ratio of Table 1. In Table 1, a value within brackets indicates a blending ratio (part) of a reduced starch saccharification product in terms of solid content relative to 100 parts of edible oil and fat. A value within parentheses indicates an amount of the corresponding component in terms of solid content. In a cell showing the blending ratio of a protein, a left value indicates a ratio (%) of a food product ingredient blended to incorporate a protein, and a right value indicates a ratio (%) of the protein incorporated in the food product ingredient. Here, as the ratio of the protein in the food product ingredient, a value listed in food composition database (Ministry of Education, Culture, Sports, Science and Technology) is used.

In Example 1, rapeseed oil was used as edible oil and fat, and "SE30" (70% aqueous solution, sugar alcohol having five or more glucoses in a ratio of 43% or more of a sugar composition, DE value of raw material dextrin: 30), available from Nikken Fine Chemicals Co., Ltd., was used as a reduced starch saccharification product. In this case, the total amount of solid contents of food product ingredients for containing a protein, a reduced starch saccharification product, and a polysaccharide was 43.5%. The amount of the reduced starch saccharification product contained in terms of solid content was 56 parts relative to 100 parts of edible oil and fat and the amount of the protein was 5.7%.

In the production of a water-soluble powder component-dispersing composition, the edible oil and fat was first placed in a kneader, whole milk powder, cheese powder, xanthan gum, salt, sodium glutamate, and black pepper were then placed, and mixed with stirring. Then, a reduced starch saccharification product and egg yolk were further mixed in the mixture with stirring, and de-gassed. Subsequently, the mixture was heated until the temperature thereof reached 90°C. After cooling, 30 g of the mixture was charged into each container to produce each product. As this container, a small pouch was used.

According to a method for drying by heating under reduced pressure, the water amount of the obtained water-soluble powder component-dispersing composition was 14%.

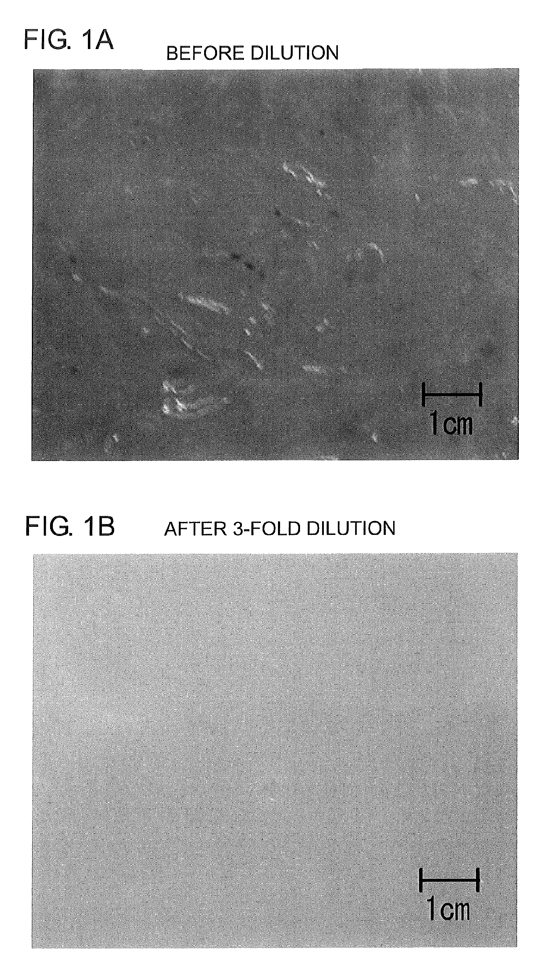

The obtained water-soluble powder component-dispersing composition was placed in a quartz cell with a thickness of 5 mm. The total light transmittance was measured with a turbidity meter (Type name "WA2000N," manufactured by NIPPON DENSHOKU INDUSTRIES CO., LTD.) using clear water as a reference in accordance with the integrating sphere type photoelectronic photometry (wavelength: 390 nm, light path length: 5 mm) and found to be 22%. The water-soluble powder component-dispersing composition was diluted threefold with water, and the total light transmittance thereof was measured similarly and found to be 7%. These results are shown in Table 1. FIG. 1 is photographs before and after dilution of a water-soluble powder component-dispersing composition of Example with water.

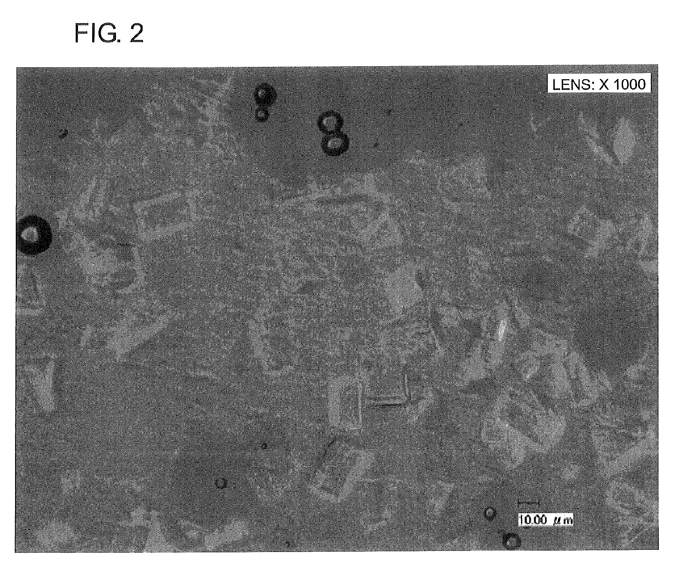

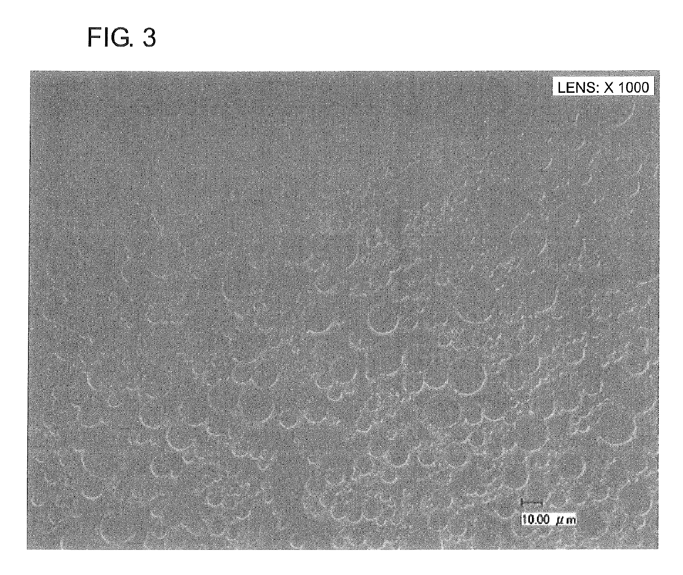

Furthermore, when the water-soluble powder component-dispersing composition was observed (magnification: 500 times) with an optical microscope, a granulated substance was observed. The water-soluble powder component-dispersing composition was diluted threefold with water, and observed with an optical microscope similarly. At this time, a granulated substance was not observed. FIG. 2 is a photograph of a result observed with the optical microscope before dilution of the water-soluble powder component-dispersing composition with water. FIG. 3 is a photograph of a result observed with the optical microscope after the dilution.

### Preparation of Fried Dish

Using the obtained water-soluble powder component-dispersing composition, a fried dish was prepared as follows. An appropriate amount of vegetable oil (salad oil) was placed in a frying pan and heated. Subsequently, 150 parts of cabbage, 30 parts of onion, and 20 parts of carrot were added to the frying pan and fried for 3 minutes while the temperature was held at about 180°C. The heat was shut off, and 30 parts of the water-soluble powder component-dispersing composition produced in Example 1 was dressed to prepare a fried dish.

Even after the obtained fried dish was preserved for 1 hour, syneresis was not remarkable. The crunchy texture of the vegetables and the taste of the whole fried dish were good, which was very preferable.

### [Examples 2 to 4 and Comparative Examples 1 to 4]

Each water-soluble powder component-dispersing composition was produced in the same manner as in Example 1 except that the blending ratio of the water-soluble powder component-dispersing composition was changed into that in Table 1. Specifically, each water-soluble powder component-dispersing composition was produced in the same manner as in Example 1 except that raw materials other than a reduced starch saccharification product, egg yolk, milk, and clear water were added to edible oil and fat, and mixed under stirring, and a reduced starch saccharification product, egg yolk, milk, and clear water were then added.

The total solid content of three components including a protein, a reduced starch saccharification product, and a polysaccharide, the water amount, the transmittance before dilution, and the transmittance after dilution of the compositions were measured as described above, and the compositions were observed with an optical microscope. The results are shown in Table 1.

Each of the water-soluble powder component-dispersing compositions in Examples 2 to 4 was used to prepare a fried dish in the same manner as in Example 1 and the obtained fried dish was preserved for 1 hour. In the fried dishes of Examples 2 and 3, syneresis was not remarkable. The crunchy texture of the vegetables and the taste of the whole fried dish were good, which was very preferable. In the fried dish of Example 4, the crunchy texture of the vegetables was reduced but syneresis was not confirmed, which was almost preferable.

In contrast, each of the water-soluble powder component-dispersing composition in Comparative Examples 1 to 4 was used to prepare a fried dish in the same manner as in Example 1. After preservation, the state was observed. Syneresis from the fried dish was remarkable, which was not preferable in appearance. Further, the taste of the vegetables was poor.

**[Table 1]**

| | Blending ratio (%) of water-soluble powder component-dispersing composition | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Edible oil and fat | Rapeseed oil | 40 | 42.3 | 34.3 | 3 | 67.3 | 28 | 0 | 22.3 |
| | Cream (solid content) | 0 | 0 | 0 | 7 (3.5) | 0 | 0 | 7 | 0 |
| | Butter | 0 | 0 | 0 | 0 | 0 | 0 | 3 | 0 |
| Reduced starch saccharification product | Reduced starch saccharification product (solid content) | 32 (22.4) *1 | 35 (24.5) *1 | 28 (19.6) *1 | 30 (22.4) *1 | 13 (9.1) *1 | 23 (16.1) *1 | 0 | 68 (47.6) *1 |
| | [Reduced starch saccharification product solid content/100 parts of edible oil and fat] | [56] | [58] | [57] | [100] | [14] | [58] | | [213] |
| Protein | Whole milk powder *3, amount of protein % | 15, 3.9 | 1, 0.3 | 20, 5.2 | 15, 3.9 | 0 | 5, 1.3 | 0 | 0.5 |
| | Cheese powder *4, amount of protein % | 5, 1.5 | 5, 1.5 | 4.5, 1.4 | 0 | 0 | 3, 0.9 | 0 | 2.5, 1 |
| | Milk *5 (solid content), amount of protein % | 0 | 0 | 0 | 0 | 0 | 0 | 85.5 (12), 2.8 | 0 |
| | Raw egg yolk *6 (solid content), amount of protein % | 2 (1), 0.33 | 10 (5.2) 1.7 | 8 (4.2) 1.3 | 0 | 13 (6.8) 2 | 6 (3.1) 1 | 0 | 0 |
| | Dried egg yolk *7, amount of protein % | 0 | | 0 | 0 | 0 | 0 | 0 | 0 |
| | Soybean protein *8, amount of protein % | 0 | 0 | 0 | 0 | 0 | 0 | 0 | 0 |
| | Dried egg albumen *9, amount of protein % | 0 | 0 | 0 | 0 | 0 | 0 | 0 | 0 |
| Polysaccharide | Xanthan gum | 0.1 | 0.1 | 0.1 | 0.1 | 0.1 | 0.1 | 0.1 | 0.1 |
| | Flour | 0 | 0 | 0 | 0 | 0 | 0 | 4 | 0 |
| | Pregelatinized starch | 0 | 0 | 0 | 0 | 0 | 0 | 0 | 0 |
| | Sugar | 0 | 0 | 0 | 4 | 0 | 0 | 0 | 0 |
| | Sucrose fatty acid ester | 0 | 0 | 0 | 0.1 | 0 | 0 | 0 | 0 |
| | Salt | 5 | 5 | 4 | 2 | 5 | 3 | 0.4 | 5 |
| | Sodium glutamate | 0.8 | 1.5 | 1 | 0.3 | 1.5 | 1 | 0 | 1.5 |
| | Black pepper | 0.1 | 0.1 | 0.1 | 0.1 | 0.1 | 0.1 | 0 | 0.1 |
| | Clear water | 0 | 0 | 0 | 11.4 | 0 | 30.8 | 0 | 0 |
| | Total | 100 | 100 | 100 | 100 | 100 | 100 | 100 | 100 |
| | Water amount (%) | 11 | 18 | 15 | 21 | 13 | 42 | 78 | 20 |
| | Solid content (%) of three components | 43.5 | 36 | 48.4 | 44.3 | 16.5 | 27.3 | 11.6 | 50.7 |
| | Three components blended as water-soluble powder | 20.1 | 6.1 | 24.6 | 15.1 | 0.1 | 8.1 | 4.1 | 3.1 |
| | Amount of protein (%) | 5.7 | 3.4 | 7.9 | 3.9 | 2 | 3.2 | 2.8 | 1 |
| | Total light transmittance (%) before dilution | 22 | 25 | 14 | 32 | Unmeasurable because of layer separation | 7 | 12 | Unmeasurable because of layer separation |
| | Total light transmittance (%) after dilution | 7 | 8 | 9 | 12 | Unmeasurable because of layer separation | 9 | 25 | Unmeasurable because of layer separation |
| | Observation of fine particles with optical microscope before dilution | Present | Present | Present | Present | - | None | None | - |
| | Syneresis from dish | Excellent | Excellent | Excellent | Good | Poor | Poor | Poor | Poor |

| | | | | | | | | | |
|---|---|---|---|---|---|---|---|---|---|
| *1: "SE30" available from Nikken Fine Chemicals Co., Ltd. *3: Protein 26% *4: Protein 30% *5: Protein 26% *6: Protein 16.5% *7: Protein 30.3% *8: Protein 90% *9: Protein 86.5% | | | | | | | | | |

### [Example 5]

A water-soluble powder component-dispersing composition was produced in the same manner as in Example 1 except that "SE100" (70% aqueous solution, sugar alcohol having five or more glucoses in a ratio of 64% or more of a sugar composition, DE value of raw material dextrin: 15), available from Nikken Fine Chemicals Co., Ltd., was used as a reduced starch saccharification product.

The obtained water-soluble powder component-dispersing composition was diluted with water in the same manner as in Example 1, and a change in the transmittance before and after the dilution was observed. As shown in the results, the degree of transparency after the dilution was significantly lower than that before the dilution.

The water-soluble powder component-dispersing composition was used to prepare a fried dish in the same manner as in Example 1 and the fried dish was preserved for 1 hour. Syneresis was not remarkable. The crunchy texture of the vegetables and the taste of the whole fried dish were good, which was very preferable.

### [Comparative Example 5]

A water-soluble powder component-dispersing composition was produced in the same manner as in Example 1 except that a reduced starch saccharification product, egg yolk, whole milk powder, cheese powder xanthan gum, salt, sodium glutamate, and black pepper, as shown in Table 2, were placed in a kneader, and mixed under stirring, and edible oil and fat were then added, and mixed under stirring.

In the obtained water-soluble powder component-dispersing composition, phase separation occurred, and the total light transmittance was not measured.

### [Example 6]

A water-soluble powder component-dispersing composition was produced in the same manner as in Example 1 except that as shown in Table 2, dried egg yolk and a soybean protein were used as a protein and a pregelatinized starch was used as a polysaccharide. Further, the dried egg yolk was mixed in edible oil and fat in the step 1.

The obtained water-soluble powder component-dispersing composition was diluted with water in the same manner as in Example 1, and a change in the transmittance before and after the dilution was observed. As shown in the results, the degree of transparency after the dilution was significantly lower than that before the dilution.

The obtained water-soluble powder component-dispersing composition was used to prepare a coleslaw salad as follows.

70 parts of julienne cabbage, 5 parts of carrot that was boiled and cut into a 5-mm cube, and 20 parts of the water-soluble powder component-dispersing composition produced in Example 6 were sufficiently mixed so as to be uniform, to prepare a coleslaw salad.

After the preparation, the coleslaw salad was preserved for 1 hour. Syneresis was not remarkable. The crunchy texture of the vegetables and the taste of the whole coleslaw salad were good, which was very preferable.

### [Example 7]

A water-soluble powder component-dispersing composition was produced in the same manner as in Example 1 except that as shown in Table 2, dried egg yolk and dried egg albumen were used as a protein and xanthan gum and a pregelatinized starch were used as a polysaccharide. Further, the dried egg yolk was mixed in edible oil and fat in the step 1.

The obtained water-soluble powder component-dispersing composition was diluted with water in the same manner as in Example 1, and a change in the transmittance before and after the dilution was observed. As shown in the results, the degree of transparency after the dilution was significantly lower than that before the dilution.

The obtained water-soluble powder component-dispersing composition was used to prepare an egg salad as follows.

A shell egg was boiled with boiling water (at 98°C for 7 minutes), the egg was cooled, and the shell was removed. Thus, the soft-boiled egg was produced. 75 parts of the obtained soft-boiled egg was cut into a 1-cm cube. In the soft-boiled egg, 20 parts of commercially available mayonnaise (available from Kewpie Corporation) and 5 parts of the water-soluble powder component-dispersing composition produced in Example 7 were mixed to prepare an egg salad of the present invention.

After the preparation, the egg salad was preserved for 1 hour. Syneresis from the egg salad was not remarkable and the taste of the whole egg salad was good, which was very preferable.

### [Comparative Example 6]

A water-soluble powder component-dispersing composition was produced in a composition without blending a polysaccharide, as shown in Table 2.

The obtained water-soluble powder component-dispersing composition was diluted with water in the same manner as in Example 1, and a change in the transmittance before and after the dilution was observed. As shown in the results, the degree of transparency after the dilution was lower than that before the dilution.

However, when the obtained water-soluble powder component-dispersing composition was used to prepare a fried dish in the same manner as in Example 1 and the fried dish was preserved for 1 hour, syneresis from the fried dish was remarkable, which was not preferable in appearance. Further, the taste of the vegetables was poor.

### [Example 8]

A water-soluble powder component-dispersing composition was produced in the same manner as in Example 1 except that the total amount of solid contents of food product ingredients of three components including a reduced starch saccharification product, a protein, and a polysaccharide was as large as 50% as compared with that in Example 1.

The obtained water-soluble powder component-dispersing composition was diluted with water in the same manner as in Example 1, and a change in the transmittance before and after the dilution was observed. As shown in the results, the degree of transparency after the dilution was significantly lower than that before the dilution.

The obtained water-soluble powder component-dispersing composition was used to prepare a fried dish in the same manner as in Example 1. At this time, the fried vegetables and the water-soluble powder component-dispersing composition were difficult to be mixed. However, after the mixture was preserved for 1 hour, the favorable results were obtained similarly to Example 1.

### [Example 9]

A water-soluble powder component-dispersing composition was produced in the same manner as in Example 1 except that as shown in Table 2, the total amount of a reduced starch saccharification product, a protein, and a polysaccharide was made lower than that in Example 1.

The obtained water-soluble powder component-dispersing composition was diluted with water in the same manner as in Example 1, and a change in the transmittance before and after the dilution was observed. As shown in the results, the degree of transparency after the dilution was significantly lower than that before the dilution.

The obtained water-soluble powder component-dispersing composition was used to prepare a fried dish in the same manner as in Example 1, and the fried dish was preserved for 1 hour. The crunchy texture of the vegetables was reduced but syneresis was not confirmed, which was almost preferable.

**[Table 2]**

| | Blending ratio (%) of water-soluble powder component-dispersing composition | Example 5 | Example 6 | Example 7 | Example 8 | Example 9 | Comparative Example 5 | Comparative Example 6 |
|---|---|---|---|---|---|---|---|---|
| Edible oil and fat | Rapeseed oil | 40 | 50.9 | 52.5 | 24 | 50 | 40 | 65.5 |
| | Cream (solid content) | 0 | 0 | 0 | 0 | 0 | 0 | 0 |
| | Butter | 0 | 0 | 0 | 0 | 0 | 0 | 0 |
| Reduced starch saccharification product | Reduced starch saccharification product (solid content) | 32 (22.4) *2 | 35 (24.5) *2 | 35 (24.5) *2 | 35 (24.5) *2 | 18 (12.6) *2 | 32 (22.4) *2 | 23.6 (16.5) *2 |
| | [Reduced starch saccharification product solid content/100 parts of edible oil and fat] | [56] | [48] | [47] | [102] | [25] | [56] | [25] |
| Protein | Whole milk powder *3, amount of protein % | 15, | 0 | 0 | 15, | 4, | 15, | 0 |
| | | 3.9 | | | 3.9 | 1.04 | 3.9 | |
| | Cheese powder *4, amount of protein % | 5, | 0 | 0 | 0 | 0 | 5, | 0 |
| | | 1.5 | | | | | 1.5 | |
| | Milk *5 (solid content), amount of protein % | 0 | 0 | 0 | 0 | 0 | 0 | 0 |
| | Raw egg yolk *6 (solid content), amount of protein % | 2(1), | 0 | 0 | 20 (10.4) | 22 (11) | 2 (1) | 5 (2.6) |
| | | 0.33 | | | 3.3 | 3.63 | 0.33 | 0.83 |
| | Dried egg yolk *7, amount of protein % | 0 | 5 | 5 | 0 | 0 | 0 | 0 |
| | | | 1.52 | 1.52 | | | | |
| | Soybean protein *8, amount of protein % | 0 | 2 | | 0 | 0 | 0 | 0 |
| | | | 1.8 | | | | | |
| | Dried egg albumen *9, amount of protein % | 0 | 0 | 0.5 | 0 | 0 | 0 | 0 |
| | | | | 0.43 | | | | |
| Polysaccharide | Xanthan gum | 0.1 | 0 | 0.1 | 0.1 | 0.1 | 0.1 | 0 |
| | Flour | 0 | 0 | 0 | 0 | 0 | 0 | 0 |
| | Pregelatinized starch | 0 | 0.5 | 0.3 | 0 | 0 | 0 | 0 |
| | Sugar | 0 | 0 | 0 | 0 | 0 | 0 | 0 |
| | Sucrose fatty acid ester | 0 | 0 | 0 | 0 | 0 | 0 | 0 |
| | Salt | 5 | 5 | 5 | 5 | 5 | 5 | 5 |
| | Sodium glutamate | 0.8 | 1.5 | 1.5 | 0.8 | 0.8 | 0.8 | 0.8 |
| | Black pepper | 0.1 | 0.1 | 0.1 | 0.1 | 0.1 | 0.1 | 0.1 |
| | Clear water | 0 | 0 | 0 | 0 | 0 | 0 | 0 |
| | Total | 100 | 100 | 100 | 100 | 100 | 100 | 100 |
| | Water amount (%) | 11 | 14 | 14 | 20 | 17 | 11 | 10 |
| | Solid content (%) of three components | 43.5 | 32.2 | 30.6 | 50 | 27.6 | 43.5 | 20.1 |
| | Three components blended as water-soluble powder | 20.1 | 7.5 | 5.9 | 15.1 | 4.1 | 20.1 | 0 |
| | Amount of protein (%) | 5.7 | 3.3 | 2 | 7.2 | 4.7 | 5.7 | 0.8 |

| | | | | | | | | |
|---|---|---|---|---|---|---|---|---|
| *2: "SE30" available from Nikken Fine Chemicals Co., Ltd. *3: Protein 26% *4: Protein 30% *5: Protein 26% *6: Protein 16.5% *7: Protein 30.3% *8: Protein 90% *9: Protein 86.5% | | | | | | | | |

## Claims

1. A water-soluble powder component-dispersing composition, comprising edible oil and fat, water, a protein, a reduced starch saccharification product, and a polysaccharide, wherein the edible oil and fat and an undissolved water-soluble powder component are each dispersed in the composition, a total light transmittance (reference: clear water, wavelength: 390 nm, light path length: 5 mm) is 13% to 35%, and a total light transmittance at the time of diluting the composition threefold with water is 0.1% to 12%.

2. The water-soluble powder component-dispersing composition according to claim 1, wherein an amount of the edible oil and fat contained is 20% to 60% by mass, and an amount of water contained is 5% to 21% by mass.

3. The water-soluble powder component-dispersing composition according to claim 1 or 2, wherein the protein, the reduced starch saccharification product, and the polysaccharide are contained by blending food product ingredients corresponding thereto, and a total amount of solid contents of the food product ingredients corresponding to the protein, the reduced starch saccharification product, and the polysaccharide is 20% to 60% by mass.

4. The water-soluble powder component-dispersing composition according to any one of claims 1 to 3, wherein the polysaccharide includes a starch and/or a gum substance.

5. A food product that is prepared from at least one of a vegetable, a heat-coagulated egg processed food product, and a tofu as a raw material, the food product comprising the water-soluble powder component-dispersing composition according to any one of claims 1 to 4.

6. A method for producing a water-soluble powder component-dispersing composition that uses food product ingredients corresponding to water, a protein, a reduced starch saccharification product, and a polysaccharide to produce the water-soluble powder component-dispersing composition according to any one of claims 1 to 4, the method comprising: a step 1 of mixing a water-soluble powder which is part of the food product ingredients and the edible oil and fat to prepare a dispersion of water-soluble powder in oil; and a step 2 of mixing the remainder of the food product ingredients in the dispersion in oil.

7. The method for producing a water-soluble powder component-dispersing composition according to claim 6, wherein an amount of water contained in the water-soluble powder to be added to the edible oil and fat in the step 1 is 10% by mass or less.

8. The method for producing a water-soluble powder component-dispersing composition according to claim 6 or 7, wherein a total amount of the water-soluble powder to be mixed with the edible oil and fat in the step 1 is 5% to 40% by mass.
